# FASCICULE DE BREVET EUROPEEN

(11) **EP 2 062 472 B1**
(45) Date de publication et mention de la délivrance du brevet: **13.04.2011**
(21) Numéro de dépôt: 08305836.2
(22) Date de dépôt: 25.11.2008
(51) Int. Cl.: A01B 39/16, A01B 13/06

(54) **Support d'outil permettant l'evitement d'un obstacle dans un rang**
Werkzeughalter, der das Ausweichen eines Hindernisses in einer Reihe ermöglicht
Support of a tool for avoiding an obstacle in a range

(30) Priorité: 26.11.2007 FR 0759301; 02.07.2008 FR 0854493
(43) Date de publication de la demande: 27.05.2009
(73) Titulaire: Souslikoff et Cie, 33340 Saint Yzans de Médoc (FR)
(72) Inventeur: Souslikoff, Dominique, 33340, Saint Yzans de Medoc (FR)
(74) Mandataire: Fantin, Laurent

(56) Documents cités:
- CA-A1- 2 549 371
- DE-U1- 9 114 640
- FR-A- 1 362 750
- FR-A- 2 104 685
- FR-A- 2 290 828
- US-B1- 6 701 857

## Description

La présente invention se rapporte à un support d'outil permettant l'évitement d'un obstacle dans un rang. Elle se rapporte également à un dispositif pour réguler automatiquement la profondeur de travail du sol d'un outil, plus particulièrement adapté au support d'outil de l'invention pour une décavaillonneuse.

Une décavaillonneuse comprend un soc qui retourne la terre sur une faible profondeur entre les pieds de vigne d'un même rang afin notamment de réaliser un désherbage de type mécanique. Selon les cas, une décavaillonneuse est rapportée sur un châssis tracté par un engin motorisé ou portée directement par l'engin motorisé.

Pour permettre l'évitement des pieds, plusieurs solutions sont connues.

La première solution consiste à relier le soc à un premier côté d'un parallélogramme déformable dans un plan sensiblement parallèle au sol. Des moyens de rappel sont prévus pour maintenir le parallélogramme dans une position dite de travail. Une canne est solidaire d'un des côtés dudit parallélogramme, notamment opposé à celui supportant l'outil, ladite canne étant susceptible de prendre appui contre les pieds afin de provoquer la déformation dudit parallélogramme à l'encontre des moyens de rappel et l'écartement de l'outil de l'axe du rang. Cette solution a pour inconvénient de générer des efforts relativement importants au niveau des pieds pour générer la déformation du parallélogramme.

Afin de pallier à cet inconvénient, une autre solution consiste à assister le mouvement d'écartement de l'outil grâce à un actionneur hydraulique double effet. Ainsi, le support d'outil comprend un palpeur susceptible de prendre contact avec les pieds, un capteur susceptible de détecter un mouvement du palpeur lorsqu'il vient en contact avec un pied et un actionneur hydraulique susceptible d'assurer le déplacement de l'outil entre une position dite de travail au niveau de l'axe du rang et une position d'évitement, l'outil étant écarté de l'axe du rang.

Selon un premier mode de réalisation, le support d'outil comprend un parallélogramme déformable dans un plan sensiblement parallèle au sol, l'outil étant solidaire d'un côté dudit parallélogramme. Le corps de l'actionneur hydraulique est lié à un premier côté et sa tige à un autre côté. Ainsi la translation de la tige provoque la déformation du parallélogramme. Pour commander l'actionneur hydraulique, un distributeur double effet est prévu, un premier état du distributeur correspondant à la tige sortie et un second état à la tige rentrée. Le palpeur est mobile par rapport au support et maintenu dans une première position grâce à des moyens de rappel. Lorsque le palpeur vient en contact avec un obstacle (pied ou piquet), il bouge légèrement à l'encontre des moyens de rappel. Ce faible mouvement est détecté par le capteur qui renseigne le distributeur qui change alors d'état provoquant le déplacement de la tige, la déformation du parallélogramme et l'écartement de l'outil de l'axe du rang. Lorsque le palpeur n'est plus en contact avec un obstacle (pied ou piquet), les moyens de rappel provoquent le déplacement dudit palpeur vers la position repos. Ce faible mouvement est détecté par le capteur qui renseigne le distributeur qui change alors d'état provoquant le déplacement de la tige, la déformation du parallélogramme et le retour de l'outil au niveau de l'axe du rang.

Selon un autre mode de réalisation, l'actionneur hydraulique est de type rotatif et l'outil est relié à un bras susceptible de pivoter grâce audit actionneur de manière à écarter l'outil de l'axe du rang. Dans ce cas également, le support comprend un palpeur, un capteur et un distributeur double effet.

Même s'ils sont relativement performants, ces dispositifs ne donnent pas pleinement satisfaction car ils sont relativement complexes en raison de l'utilisation d'un actionneur et d'un distributeur double effet et en raison de l'utilisation d'huile comme fluide qui peut être polluante en cas de fuite.

Les documents FR-1.362.750, FR-2.104.685 et FR-2.290.828 décrivent des décavaillonneuses comprenant chacune un parallélogramme déformable dont la déformation est commandée par un actionneur de type pneumatique. Toutefois, les solutions proposées pas ces documents ne sont pas satisfaisantes car l'agencement du parallélogramme déformable et de l'actionneur ne permet pas une optimisation du support en matière de puissance de l'actionneur et d'encombrement.

Selon une autre contrainte liée au désherbage de type mécanique, la qualité dépend essentiellement de la régularité de la profondeur de travail de l'outil. Pour obtenir une qualité optimale, le soc ou la lame doit travailler le sol sur une hauteur de l'ordre de 5 cm. Si la profondeur de travail n'est pas suffisante, les racines de la végétation restent dans le sol non travaillé si bien que la végétation reprend rapidement. Dans le cas contraire, si la profondeur de travail est excessive, les racines de la végétation sont retournées avec trop de terre ne leur permettant pas de sécher si bien que la végétation reprend également rapidement.

Par conséquent, la hauteur de travail doit être régulée de manière précise. Même s'il existe des moyens de réglage de la hauteur de l'outil, ces derniers sont mécaniques et sont réglés par l'utilisateur au début de chaque rang.

Le sol n'étant pas régulier le long d'un rang, la profondeur de travail de l'outil devrait être régulièrement ajustée le long du rang. Or, l'utilisateur peut difficilement de manière simultanée diriger son engin et régler de manière quasi continue la profondeur de travail. Aussi, la qualité du désherbage est liée à la dextérité de l'utilisateur ce qui n'est pas satisfaisant.

Lorsque deux outils sont utilisés simultanément pour travailler deux rangs aux reliefs différents, avec un éventuel dévers, lors d'un même passage, ce réglage manuel est quasi impossible.

Dans le domaine agricole, on connait des systèmes permettant d'ajuster la profondeur de travail du sol, notamment dans le domaine du labour. Selon un mode de réalisation , une charrue est reliée au tracteur par l'intermédiaire d'un attelage trois points comportant un dispositif de relevage. Pour réguler la profondeur de travail, des moyens sont prévus pour mesurer l'effort de l'outil sur le dispositif de relevage et ajuster sa hauteur en fonction de l'effort mesuré qui doit osciller dans une plage de valeurs. Si l'effort mesuré dépasse la valeur maximale de la plage alors une commande est transmise afin de relever le système de relevage et réduire la profondeur de travail des socs de la charrue. Dans le cas contraire, si l'effort mesuré est inférieur à la valeur minimale de la plage alors une commande est transmise afin de baisser le système de relevage et augmenter la profondeur de travail des socs de la charrue.

Même si elle permet de réguler la profondeur de manière automatique, cette solution n'est pas satisfaisante car elle nécessite un engin motorisé équipé d'un système de relevage particulier et ne permet pas de réguler indépendamment deux outils. Enfin, cette solution ne permet pas de réguler de manière optimale la profondeur de travail dans le cas d'une décavaillonneuse, la mesure de l'effort étant perturbée lors de l'évitement des pieds notamment par le poids et l'inertie du châssis en mouvement.

Dans le domaine agricole, on connait également des systèmes permettant de régler en hauteur de manière indépendante des éléments d'un semoir. Selon un mode de réalisation, chaque élément du semoir peut pivoter autour d'un axe horizontal et comprend un galet suiveur prévu pour rouler sur le sol. En roulant, le galet suit le relief du sol et fait éventuellement pivoter l'élément autour de l'axe horizontal afin que les graines soient disposées sensiblement à la même profondeur.

Cette solution n'est pas satisfaisante dans le cas d'une décavaillonneuse en raison du décalage entre le galet suiveur et l'outil, ce qui conduit à une plage de terre non travaillée autour de chaque pied importante.

Le document US-5.957.218 décrit un enseignement relativement proche appliqué à une herse. Selon ce document, la herse comprend plusieurs éléments dont les positions par rapport au sol des différents éléments peuvent être ajustées les unes par rapport aux autres. Dans ce cas, chaque élément comprend un bâti supportant plusieurs outils, avec à l'avant et à l'arrière des roues en contact avec le sol montées sur des bras montés pivotant par rapport au bâti. Un actionneur est prévu sur chaque bras afin de le faire pivoter et ajuster la hauteur du bâti par rapport au sol. Des capteurs sont prévus pour déterminer la position de chaque bras et renseigner une unité centrale qui commande en fonction de la différence de position des bras des différents éléments les actionneurs afin d'ajuster la position des éléments entre eux. Comme précédemment, cette solution n'est pas satisfaisante dans le cas d'une décavaillonneuse en raison du décalage entre les roues et les éléments supportant les outils lors du passage d'un pied, ce qui conduit à une plage de terre non travaillée autour de chaque pied importante.

Aussi, la présente invention vise à pallier les inconvénients de l'art antérieur en proposant un support d'outil, plus particulièrement adapté à une décavaillonneuse, permettant d'optimiser la puissance nécessaire et la qualité du travail.

A cet effet, l'invention a pour objet un support d'outil susceptible de se translater selon une direction sensiblement parallèle à un rang, de manière à maintenir un outil au droit de l'axe dudit rang entre des obstacles, ledit support comprenant un premier bras, un deuxième bras dont une première extrémité est articulée selon un premier axe de rotation à une première extrémité distale du premier bras, un troisième bras auquel est relié l'outil dont une première extrémité est articulée selon un deuxième axe de rotation sensiblement parallèle au premier axe à la seconde extrémité du deuxième bras et un quatrième bras dont une première extrémité est articulée selon un troisième axe de rotation sensiblement parallèle au premier axe à la seconde extrémité du troisième bras et dont la seconde extrémité est articulée selon un quatrième axe de rotation sensiblement parallèle au premier axe à une seconde extrémité du premier bras, ledit support étant susceptible d'occuper un premier état dans lequel l'outil est disposé au niveau de l'axe du rang et un second état dans lequel l'outil est écarté de l'axe du rang, ledit support comprenant également des moyens de détection d'un obstacle et au moins un actionneur pneumatique piloté par lesdits moyens de détection assurant au moins le maintien du support dans le second état, caractérisé en ce que ledit au moins un actionneur pneumatique est intercalé entre le premier bras et un prolongement du deuxième bras disposé à l'opposé au deuxième axe de rotation par rapport au premier axe de rotation.

D'autres caractéristiques et avantages ressortiront de la description qui va suivre de l'invention, description donnée à titre d'exemple uniquement, en regard des dessins annexés sur lesquels :
- la figure 1 est une vue de dessus d'une partie du support d'outil de l'invention en position de travail, l'outil étant disposé au niveau de l'axe du rang,
- la figure 2 est une vue de dessus d'une partie du support de l'outil de l'invention au niveau d'un obstacle, en position d'évitement, l'outil étant écarté de l'axe du rang,
- la figure 3 est une vue de dessus d'une partie du support d'outil de l'invention juste après le passage d'un obstacle,
- la figure 4 est une vue de dessus d'une machine plus particulièrement adaptée pour travailler de manière simultanée deux demi rangs,
- la figure 5 est une vue latérale d'un dispositif pour ajuster automatiquement la profondeur de travail d'un outil selon une variante de l'invention,

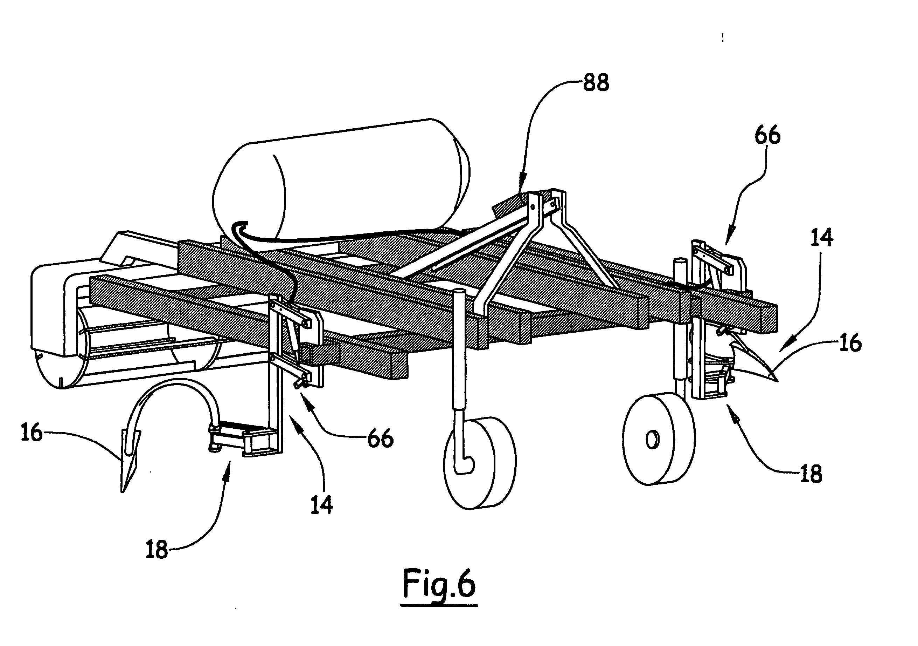

- la figure 6 est une vue en perspective d'une machine comportant deux dispositifs selon l'invention permettant de travailler le sol de deux rangs de manière simultanée,
- la figure 7 est une vue latérale d'un dispositif pour ajuster automatiquement la profondeur de travail d'un outil selon une autre variante de l'invention,
- la figure 8 est une vue latérale d'un premier mode de réalisation d'une seconde articulation prévue pour réguler de manière automatique la profondeur de travail du sol d'un outil,
- la figure 9A est une vue en perspective d'une première partie d'un second mode de réalisation d'une seconde articulation prévue pour réguler de manière automatique la profondeur de travail du sol d'un outil,
- la figure 9B est une vue en perspective d'une seconde partie d'un second mode de réalisation d'une seconde articulation prévue pour réguler de manière automatique la profondeur de travail du sol d'un outil, et
- la figure 10 est un schéma illustrant un second mode de réalisation d'une seconde articulation prévue pour réguler de manière automatique la profondeur de travail du sol d'un outil.

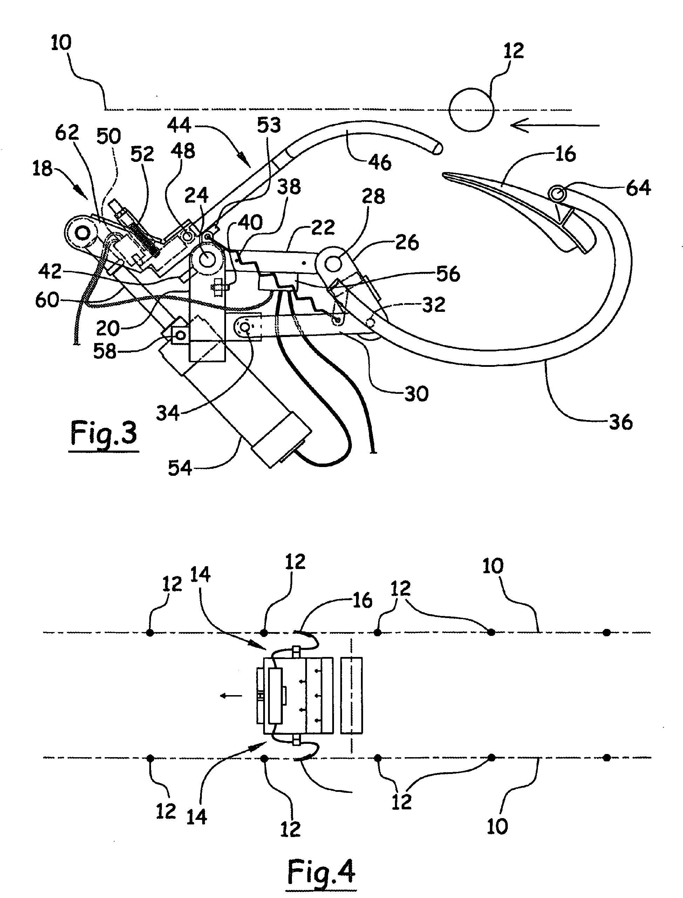

Sur la figure 4, on a représenté une machine supportant deux décavaillonneuses. Sur les différentes figures, on a matérialisé en pointillés l'axe d'un rang 10 comprenant des obstacles 12 tels que des pieds ou des piquets.

On a représenté un support d'outil 14 auquel est relié un outil 16, tel qu'un soc dans l'exemple illustré. Même s'il est décrit appliqué à une décavaillonneuse susceptible de travailler les rangs de vigne, le support d'outil selon l'invention peut convenir à d'autres outils (comme une lame inter ceps par exemple) et à d'autres types de culture.

Le support d'outil 14 est susceptible de se translater selon une direction (matérialisée par les flèches sur les figures) sensiblement parallèle auxdits rangs 10 de manière à maintenir l'outil au droit de l'axe du rang entre les obstacles.

Le support d'outil 14 peut être fixé sur une machine reliée à un engin motorisé tel qu'un tracteur ou directement fixé à un engin motorisé.

Selon un mode de réalisation, le support d'outil comprend éventuellement une première partie 18 assurant l'évitement des obstacles 12 et éventuellement une seconde partie assurant la régulation automatique de la profondeur de travail de l'outil 16.

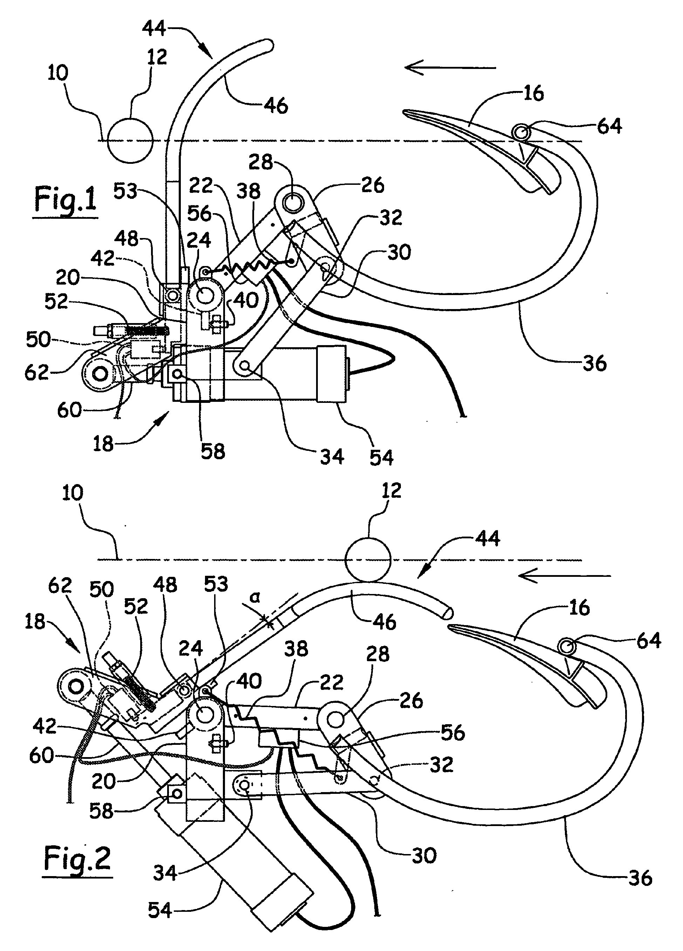

La partie 18 assurant l'évitement des obstacle est décrite en détails sur les figures 1 à 3.

Cette première partie 18 comprend un premier bras 20 s'étendant dans un plan sensiblement parallèle au sol, un deuxième bras 22 dont une première extrémité est articulée selon un premier axe 24 de rotation sensiblement perpendiculaire au sol à une extrémité distale du premier bras 20, un troisième bras 26 dont une première extrémité est articulée selon un deuxième axe 28 de rotation sensiblement parallèle au premier axe 24 à la seconde extrémité du deuxième bras 22 et un quatrième bras 30 dont une première extrémité est articulée selon un troisième axe 32 de rotation sensiblement parallèle au premier axe 24 à la seconde extrémité du troisième bras 26 et dont la seconde extrémité est articulée selon un quatrième axe 34 de rotation sensiblement parallèle au premier axe 24 au premier bras 20.

Les quatre bras 20, 22, 26 et 30 forment un quadrilatère déformable.

L'outil 16 est solidarisé au troisième bras 26 par l'intermédiaire d'un col de cygne 36.

Ainsi, comme illustré sur la figure 1, lorsque le quadrilatère est dans une première configuration, l'outil 16 est disposé au niveau de l'axe 10 du rang alors que lorsqu'il est dans une seconde configuration, l'outil 16 est écarté de l'axe du rang 10 comme illustré sur les figures 2 et 3.

Des moyens de rappel 38 sont prévus pour maintenir le quadrilatère dans la première configuration pour laquelle l'outil 16 est disposé au niveau de l'axe 10 du rang. Selon un mode de réalisation, les moyens de rappel 38 comprennent au moins un ressort de traction.

En complément des moyens de rappel, une butée 40 de préférence réglable permet d'ajuster la première configuration. Ainsi, l'un des éléments mobiles, notamment le deuxième bras 22 comprend un prolongement 42 susceptible de venir en appui contre une butée 40 solidaire du premier bras 20. Les moyens de rappel 38 permettent de maintenir plaqué le prolongement 42 contre la butée 40.

Le quadrilatère déformable permet de conserver l'orientation du soc lors de l'évitement contrairement à la variante avec un seul axe de rotation qui provoque un pivotement du soc.

Par ailleurs, en ajustant la longueur des bras entre les axes de rotation et/ou en ajustant la forme du col de cygne, on peut parvenir à définir une cinématique particulière du soc lors de l'évitement et à réduire les efforts de l'outil sur le support lors du travail de la terre. En complément la forme de l'outil, la géométrie du support et/ou les moyens de rappel 38 permettent d'obtenir un quasi-équilibre des efforts lorsque l'outil travaille le sol.

Les formes de l'outil 16 permettent un meilleur retour de l'outil vers le premier état et contribue à réduire la puissance nécessaire.

La première partie 18 assurant l'évitement des obstacles comprend des moyens 44 de détection d'un obstacle présent au niveau du rang.

Ces moyens 44 de détection comprennent un palpeur 46 susceptible de pivoter autour d'un axe de rotation 48 sensiblement parallèle à l'axe d'articulation 24 ainsi qu'un capteur 50 permettant de détecter le mouvement de pivotement dudit palpeur 46.

Selon un mode de réalisation, le palpeur 46 est maintenu dans une première position correspondant à l'absence d'obstacle comme illustré sur les figures 1 et 3, grâce à des moyens de rappel 52 qui viennent l'immobiliser contre une butée 53.

Lors de l'évitement, le palpeur 46 est maintenu contre la butée 53. La disposition et les formes du palpeur 46 et de l'outil 16 sont telles que l'outil 16 est en retrait par rapport au palpeur 46 lors de l'évitement et ne vient pas en saillie afin d'accrocher l'obstacle.

Selon un autre avantage de cette configuration, les moyens de détection 44 en prenant appui contre la butée 53 peuvent assister mécaniquement la modification de la géométrie du support d'outil, par exemple si l'effort de l'actionneur n'est pas suffisant. De plus, quels que soient les efforts exercés sur l'outil, les moyens de détection 44 assurent le passage du support dans le second état et garantissent que l'outil 16 est toujours décalé par rapport à l'obstacle.

De préférence, le palpeur 46 comprend une première partie sensiblement rectiligne et une extrémité légèrement courbe vers l'arrière selon le sens de déplacement de l'outil, la partie rectiligne étant sensiblement perpendiculaire à l'axe du rang et le début de la partie courbe étant disposé sensiblement au droit de l'axe du rang.

Lorsque le palpeur 46 vient en contact avec un obstacle 12, il pivote légèrement d'un angle a à l'encontre des moyens de rappel 52. Le capteur 50 sous forme d'un contacteur est alors actionné par le palpeur. L'obstacle passé, comme illustré sur la figure 3, le palpeur 46 pivote à contre sens grâce à l'action des moyens de rappel 52 et n'actionne plus le contacteur 50.

Avantageusement, la sensibilité des moyens 44 de détection est ajustable, en tarant plus ou moins les moyens de rappel 52 par exemple.

Selon un mode de réalisation, l'axe de rotation 48 du palpeur 46 est solidaire de la partie mobile, et notamment dans le cas illustré du deuxième bras 22. Cette configuration permet au palpeur de pivoter également lors de l'évitement ce qui facilite le passage de l'obstacle.

L'invention n'est pas limitée à ce type de moyens de détection et d'autres solutions pourraient être envisagées pour la détection des obstacles.

La première partie 18 assurant l'évitement des obstacles comprend au moins un actionneur pneumatique 54 assurant le mouvement d'au moins une partie mobile pour générer le mouvement de l'outil 16 d'un premier état dans lequel il est positionné au droit de l'axe du rang à un second état dans lequel il est écarté par rapport audit axe du rang afin d'éviter un obstacle, ledit actionneur pneumatique 54 étant piloté par les moyens de détection.

La solution pneumatique permet de limiter les risques de pollution en cas de fuite. Par ailleurs, le fait d'utiliser l'énergie pneumatique permet de réduire les puissances nécessaires ce qui se traduit par une réduction de la consommation. Enfin, l'usage d'un actionneur pneumatique permet d'obtenir une certaine souplesse du mécanisme, l'air étant comprimable, qui limite les risques d'endommagement.

De préférence, l'actionneur pneumatique 54 est de type simple effet et permet de provoquer uniquement l'écartement de l'outil de l'axe du rang à l'encontre des moyens de rappel 38.

Selon ce mode de réalisation, une seule chambre de l'actionneur pneumatique 54 est alimentée en air comprimé provenant d'une source non représentée. L'alimentation est commandée par une vanne 56 qui est elle-même commandée par les moyens 44 de détection.

Lorsque les moyens 44 détectent un obstacle, comme illustré sur la figure 2, ils commandent l'ouverture de la vanne 56 qui autorise l'alimentation de l'actionneur pneumatique 54. Ce dernier provoque le changement d'état du système à l'encontre des moyens de rappel 38 ce qui se traduit par l'écartement de l'outil 16 de l'axe du rang. Tant que le palpeur 46 est en contact avec l'obstacle, l'actionneur pneumatique 54 est alimenté en air comprimé et l'outil est maintenu écarté de l'axe du rang. Lorsque le palpeur 46 n'est plus en contact avec l'obstacle, comme illustré sur la figure 3, les moyens de détection 44 commandent la fermeture de la vanne 56 qui stoppe l'alimentation de l'actionneur pneumatique 54. Ce dernier n'étant plus alimenté, les moyens de rappel 38 provoquent le changement d'état du système ce qui se traduit par le retour de l'outil au droit du rang.

Dans le cas d'un actionneur pneumatique simple effet, les moyens de rappel 38 permettent d'obtenir une position stable, celle-ci correspondant à la position de travail lorsque l'outil est au niveau de l'axe 10 du rang, l'actionneur pneumatique permettant le changement d'état et le maintien dans la position écartée.

Selon un autre mode de réalisation, l'actionneur pneumatique est de type double effet et permet le maintien dans les positions stables, à savoir au niveau du rang et écartée du rang, ainsi que le changement d'un état à l'autre.

Cette configuration a pour avantage de permettre à l'utilisateur de forcer le changement d'état et d'imposer à l'outil un retour en position de travail, au niveau du rang.

Avantageusement, l'actionneur pneumatique comprend un étrangleur réglable afin d'ajuster la cinématique de l'outil de la position au droit de l'axe du rang à la position écartée, l'étrangleur étant disposé soit au niveau de l'échappement ou soit au niveau de l'admission.

Un actionneur pneumatique procure les avantages suivants :

Il permet de simplifier le support d'outil dans la mesure où seul le mouvement d'écartement de l'outil est provoqué directement par l'actionneur pneumatique, ce qui simplifie la gestion des flux d'air, de prévoir un actionneur simple effet et une distribution (vanne) simplifiée.

Par ailleurs, elle permet de réduire significativement la consommation dans la mesure où l'énergie n'est nécessaire qu'au moment du franchissement de l'obstacle.

Selon un autre avantage, l'énergie pneumatique est plus réactive, l'énergie étant stockée dans un réservoir et libérée dans l'actionneur. Ainsi, on obtient un mouvement rapide au début du mouvement d'écartement ajustable grâce à l'étranglement. Cette configuration permet de limiter les risques d'endommagement des plantes, ce qui est essentiel pour les jeunes plants ou pour certaines cultures comme les pommiers.

L'usage de l'air comprimé permet de rejeter ce fluide dans la nature sans risque de polluer, ce qui simplifie également la partie gestion de l'alimentation en fluide. Enfin, l'usage d'un actionneur pneumatique permet d'obtenir une certaine souplesse du mécanisme, l'air étant comprimable, ce qui permet de réduire les risques d'endommagement.

Selon l'invention, l'actionneur 54 est intercalé entre le premier bras 20 et un prolongement 62 du deuxième bras, ledit prolongement 62 étant disposé à l'opposé du deuxième axe de rotation 28 par rapport au premier axe de rotation 24. Ainsi, le premier axe de rotation 24 est disposé entre le deuxième axe de rotation et l'articulation entre l'actionneur 54 et le prolongement 62. Cette disposition permet d'optimiser la puissance de l'actionneur grâce à un bras de levier plus important qui permet de réduire l'effort nécessaire pour provoquer l'écartement de l'outil. Selon un autre avantage, dans cette configuration, l'actionneur 54 est disposé à l'opposé de l'outil 16 et ne risque pas d'interférer avec ledit outil ou un élément projeté par ledit outil, ce qui contribue à fiabiliser le mécanisme. Enfin, cette configuration permet à l'ensemble d'être plus compact dans la mesure où l'actionneur 54 peut ne pas être décalé en hauteur par rapport au parallélogramme.

De préférence, le corps de l'actionneur 54 comprend une extrémité, au niveau de laquelle sort sa tige 60, qui est montée pivotante autour d'un axe 58 solidaire du premier bras 20, l'extrémité de la tige 60 étant reliée au prolongement 62. Cette configuration procure une grande compacité facilitant la mise en place d'un éventuel carter.

La position de l'axe 58 est déterminée de manière à obtenir un bras de levier constant et important sur toute la course de la tige de l'actionneur, notamment en fin de course lorsque la tige est sortie.

Selon une autre variante de l'invention, un système débrayable peut être prévu au niveau de la liaison entre l'outil 16 et le col de cygne 36.

Selon un mode de réalisation, l'extrémité du col de cygne 36 comprend un axe 64 autour duquel peut pivoter l'outil 16. Le système débrayable permet dans un premier état de bloquer la rotation de l'outil 16 autour de l'axe 66 et dans un second état dit débrayé d'autoriser la rotation du soc.

Selon une autre variante, le système de débrayage peut être remplacé par un ressort ou un vérin pneumatique interposé entre l'outil et le col de cygne qui immobilise l'outil lorsque l'effort exercé par l'outil 16 sur la liaison ne dépasse un certain seuil et qui permet à l'outil de pivoter lorsque ledit effort dépasse un certain seuil, de préférence ajustable en tarant plus ou moins le ressort ou le vérin.

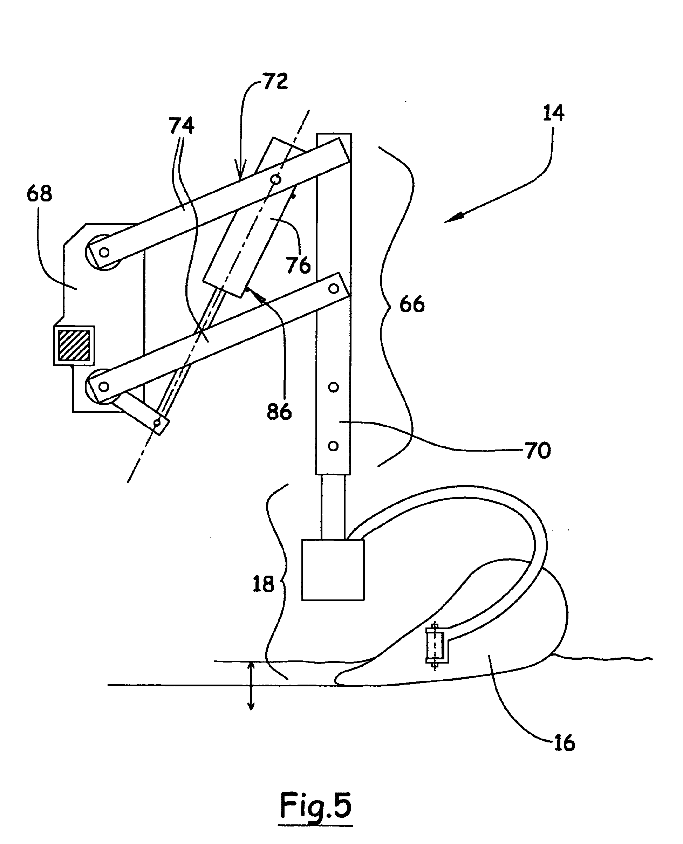

Le support d'outil peut comprendre une seconde partie 66 assurant la régulation de manière automatique de la profondeur de travail de l'outil 16 illustré en détails sur la figure 5.

Cette seconde partie appelée par la suite dispositif de régulation 66 comprend une partie 68 reliée directement ou non à un engin motorisé et une partie mobile 70 reliée à l'outil, selon l'exemple illustré un montant 70 relié au premier bras 20 de la partie assurant l'évitement des obstacles.

Une articulation 72 est prévue entre les parties 68 et 70 pour permettre un mouvement dans un plan sensiblement vertical ou perpendiculaire au sol de l'outil 16 par rapport à l'engin motorisé et ajuster sa profondeur de travail.

Selon un mode de réalisation privilégié, cette articulation se présente sous la forme d'un parallélogramme déformable, deux bieliettes 74 assurant la liaison entre la partie fixe 68 et la partie mobile 70. Le parallélogramme permet d'obtenir une variation de la hauteur de l'outil sans modifier son orientation ou sans influencer les mouvements de l'outil lors de l'évitement d'un obstacle.

Un actionneur 76 est prévu pour déformer l'articulation 72. Dans le cas, d'un parallélogramme déformable, l'actionneur peut être interposé entre une biellette 74 et la partie fixe 68.

Selon un mode de réalisation, l'actionneur 76 se présente sous la forme d'un vérin, par exemple de type électrique ou hydraulique.

Selon une caractéristique de l'invention, le dispositif de régulation 66 comprend des moyens 86 de mesure d'au moins une résultante de la force de réaction du sol sur l'outil 16 disposés au niveau du support d'outil 14 ainsi que des moyens 88 de contrôle renseignés par les moyens 86 de mesure et commandant l'articulation 72, notamment l'actionneur 76, afin de modifier si nécessaire la profondeur de l'outil 16.

Chaque outil dont la profondeur de travail est régulée comprend une articulation et des moyens 86 de mesure qui lui sont dédiés. Lorsque plusieurs outils 16 dont la profondeur de travail est régulée sont rapportés sur une même machine ou engin des moyens 88 de contrôle uniques peuvent permettre de contrôler plusieurs outils à la fois.

Contrairement à l'art antérieur, chaque outil travaillant le sol comprend des moyens 86 de mesure ce qui permet d'optimiser la régulation de la profondeur de travail des outils qui sont régulés individuellement.

Dans la mesure où les moyens de mesure sont portés par le support d'outil et ne sont pas décalés par rapport à l'outil, comme un galet suiveur de l'art antérieur, la présence du dispositif de régulation n'augmente pas la plage de terre non travaillée autour du pied lors de l'évitement.

Selon un mode de réalisation illustré sur la figure 5, les moyens 86 de mesure sont disposés au niveau de l'articulation 72. Cet agencement permet d'éloigner les moyens 86 de mesure de la zone active de l'outil et limite les risques d'endommagement desdits moyens 86 de mesure.

De préférence, les moyens 86 de mesure permettent de mesurer une déformation de l'articulation, au moins une résultante de l'effort de réaction du sol sur l'outil tendant à déformer l'articulation 72.

Selon un mode de réalisation illustré sur la figure 5, un capteur de pression peut être utilisé comme moyen de mesure 86 lorsque l'actionneur 76 est de type hydraulique et utilisé pour mesurer au moins une résultante de l'effort de réaction du sol sur l'outil tendant à déformer l'articulation.

Selon un autre mode de réalisation non représenté, l'une des biellettes 74 est remplacée par un vérin de type hydraulique et un capteur de pression est utilisé comme moyen de mesure 86 d'au moins une résultante de l'effort de réaction du sol sur l'outil tendant à déformer l'articulation.

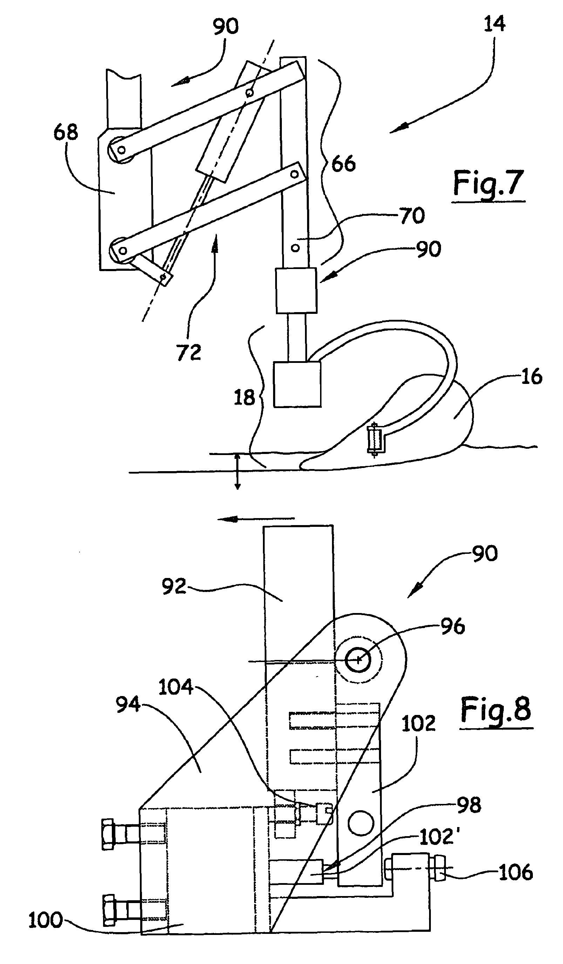

Selon une autre variante de l'invention illustrée sur la figure 7, le support d'outil 14 comprend au moins deux articulations, une première articulation 72 permettant de modifier la profondeur de l'outil 16, par exemple un parallélogramme déformable, et une seconde articulation 90 permettant de mesurer au moins une résultante de la force de réaction du sol sur l'outil.

Cette seconde articulation 90 est plus particulièrement disposée entre la première articulation 72 et l'outil 16.

La seconde articulation 90 comprend une partie fixe 92 reliée à un engin motorisé ou à un châssis relié à un engin motorisé et une partie mobile 94 solidaire de l'outil 16, les deux parties 92 et 94 étant mobiles l'une par rapport à l'autre selon un axe de pivotement 96 sensiblement parallèle au sol et perpendiculaire au mouvement d'avance.

Selon le mode de réalisation illustré sur la figure 7, la première partie 92 est reliée au montant 70 de la première articulation et la seconde partie 94 est relié au premier bras 20 de la partie assurant l'évitement des obstacles.

Ainsi, la force de réaction du sol sur l'outil ou au moins une de ses résultantes conduit à un mouvement relatif des deux parties 92 et 94.

Des moyens de mesure 86 sont intercalés entre les deux parties 92 et 94 de manière à quantifier ce mouvement relatif qui est sensiblement proportionnel à la force de réaction du sol sur l'outil 16. Généralement, les moyens de mesure 86 se présentent sous la forme d'une jauge de contrainte 98.

Des moyens sont prévus pour limiter ce mouvement de rotation relatif entre les deux parties sur une plage angulaire de l'ordre de quelques fractions de degrés de manière à ce que les moyens de mesure 86 travaillent sur une plage optimale, notamment dans le cas d'une jauge de contrainte.

Selon un premier mode de réalisation illustré sur la figure 8, la première partie 92 se présente sous la forme d'un montant supportant un axe de pivotement 96. En complément, la seconde partie 94 se présente sous la forme d'une chape avec à une première extrémité des portées montées rotatives sur l'axe de pivotement 96 et à une seconde extrémité un fourreau 100 dans lequel peut s'emmancher un montant supportant l'outil 16. Une jauge de contrainte 98 est intercalée entre le fourreau 100 et la première partie 92. Ainsi, une première partie 102 de la jauge de contrainte 98 est solidaire du montant de la première partie 92 alors qu'une seconde partie 102' est reliée au fourreau 100. Une butée 104 permet de limiter le mouvement de rotation dans un premier sens et une seconde butée 106 permet de limiter le mouvement de rotation dans l'autre sens. Avantageusement, ces deux butées sont réglables afin d'ajuster la plage angulaire de rotation entre les deux parties 92 et 94.

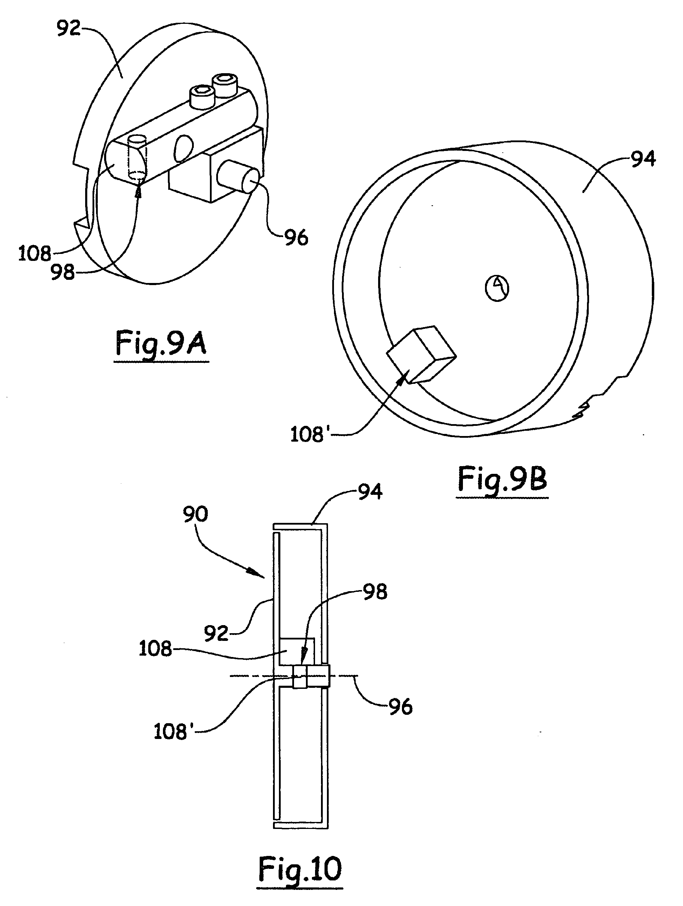

Selon un autre mode de réalisation illustré sur les figures 9A, 9B et 10, les parties 92 et 94 se présentent chacune sous la forme d'un disque pivotant autour du même axe de pivotement 96, les deux disques étant faiblement espacés et l'un deux comprenant une paroi périphérique cylindrique de manière à délimiter une cavité dans laquelle sont placés les moyens de mesure 86 afin de les protéger. Des butées sont prévues pour limiter le mouvement de rotation relatif entre les deux parties 92 et 94.

Une jauge de contrainte 98 est intercalée entre les deux parties en saillie 92 et 94 de manière à quantifier le mouvement relatif entre lesdites deux parties 92 et 94 et de la sorte la force de réaction du sol sur l'outil.

La jauge de contrainte 98 comprend une première partie 108 solidaire du premier disque 92 et une seconde partie 108' solidaire du second disque 94.

Le principe de fonctionnement du dispositif de régulation de l'invention est le suivant :

En l'absence de commande, lorsque la profondeur de l'outil varie, cela se traduit par une variation de la force de réaction du sol sur l'outil 16 qui tend à déformer au moins une articulation 72 ou 90. La déformation de cette articulation est quantifiée par les moyens de mesure 86.

Dans le cas d'une unique articulation 72 et d'une prise de mesure au niveau du vérin hydraulique 76 comme illustré sur la figure 5, la déformation de l'articulation 72 tend à faire varier la pression au niveau d'une des chambres du vérin hydraulique 76 qui s'éloigne alors d'une valeur de consigne.

Dans le cas d'une unique articulation déformée par un vérin électrique 76 et d'une biellette 74 sous forme d'un vérin hydraulique, la déformation de l'articulation 72 tend à faire varier la pression au niveau d'une des chambres du vérin hydraulique constituant la biellette 74 qui s'éloigne alors d'une valeur de consigne.

Dans le cas de deux articulations 72 et 90 comme illustré sur la figure 7, la déformation de l'articulation 90 tend à modifier la pression exercée sur la jauge de contrainte qui s'éloigne comme précédemment d'une valeur de consigne. Lorsque l'écart entre la valeur mesurée par les moyens de mesure 86 s'écarte de la valeur de consigne d'une certaine tolérance de correction alors les moyens de contrôle 88 tendent à modifier la profondeur de l'outil en commandant l'articulation 72 et plus particulièrement l'actionneur 76 ou une autre articulation.

L'écart peut indifféremment être positif ou négatif ce qui traduit en fait une profondeur de travail du sol excessive ou insuffisante.

Selon un procédé de commande, on effectue des mesures de la force de réaction du sol sur l'outil toutes les secondes pour chaque outil. Dans une mémoire tampon, on stocke les valeurs de trois mesures consécutives dont on fait la moyenne. Cette moyenne est en suivant mémorisée pour être comparée à une valeur de consigne prédéterminée pour chaque outil.

Si la différence entre cette moyenne et la consigne dépasse une tolérance de correction alors les moyens de contrôle 88 commandent la modification de la profondeur de l'outil.

Le fait de faire une moyenne des valeurs mesurées et de corriger la profondeur de l'outil en fonction de cette moyenne permet d'obtenir un système plus stable. Pour améliorer cette stabilité, il est possible d'ajuster la commande de l'actionneur chargé de modifier la profondeur de l'outil en fonction de l'écart entre la moyenne et la valeur de la consigne.

Ainsi, la durée de l'impulsion de commande de l'actionneur chargé de modifier la profondeur de l'outil est fonction d'une part de l'écart entre la moyenne et la valeur de la consigne et d'autre part d'une constante de réglage de la réactivité prédéterminée par l'utilisateur, la durée de l'impulsion étant égale à l'écart divisé par la constante de réglage.

Selon un premier mode de fonctionnement dit indépendant, chaque outil est corrigé indépendamment avec une valeur de consigne ou profondeur qui lui est propre et qui peut être différente d'un outil à l'autre.

Généralement, dans ce mode, les tolérances de correction et les constantes de réglage de la réactivité des outils sont identiques.

Dans ce cas, les outils peuvent travailler à une profondeur régulée qui est différente d'un outil à l'autre.

A titre d'exemple, un premier outil peut travailler à une première profondeur qui correspond à une consigne de 20 avec une tolérance de +/- 5. Dans ce cas, la valeur mesurée par les moyens 86 peut osciller dans une plage allant de 15 à 25 sans que les moyens de contrôle 88 modifient la profondeur de l'outil.

Un deuxième outil peut avoir une consigne et/ou une tolérance de correction identique ou différente du premier outil.

Selon un autre mode de fonctionnement dit avec basculement, plus particulièrement adapté à un fort dévers, l'utilisateur peut programmer une profondeur identique aux deux outils mais avec un décalage en fonction du dévers.

Dans ce cas, le dispositif comprend une commande permettant de régler le décalage par rapport à une profondeur moyenne permettant d'affecter un décalage d'une certaine valeur, par exemple +2, à un premier outil situé en haut du devers et un décalage d'une valeur opposée, par exemple -2, à un deuxième outil situé en bas du dévers. En bout de rang, lors d'un demi-tour, l'utilisateur n'a plus qu'à commuter la commande pour inverser les réglages. Ainsi, le deuxième outil situé en haut du dévers a un décalage de +2 alors que le premier outil situé en bas du dévers a un décalage de -2.

A titre d'exemple, pour une consigne moyenne de 20 et une tolérance de +/-5 et des décalages de +2 et -2, la valeur mesurée au niveau d'un premier outil peut varier de 13 à 23 alors que la valeur mesurée au niveau du deuxième outil peut varier de 17 à 27.

Comme précédemment, le dispositif de régulation 66 comprend des moyens 86 de mesure d'au moins une résultante de la force de réaction du sol sur l'outil 16 disposés au niveau du support d'outil 14 ainsi que des moyens 88 de contrôle renseignés par les moyens 86 de mesure et commandant l'articulation 72 afin de modifier si nécessaire la profondeur de l'outil 16. Dans ce cas, les moyens 86 se présentent sous la forme d'un capteur de pression permettant de mesurer la pression du fluide hydraulique délivré au moteur hydraulique entrainant en rotation l'outil rotatif. Cette pression étant sensiblement proportionnelle à la profondeur de travail, on peut à partir de sa mesure réguler la profondeur de l'outil.

De manière générale, le support d'outil selon l'invention comprend des moyens 86 permettant de mesurer au moins une résultante de la force de réaction du sol sur l'outil et des moyens de contrôle 88 régulant la position de l'outil en fonction de la différence entre la valeur mesurée et une valeur de consigne.

De préférence, le support d'outil comprend au moins une articulation dont la déformation permet de quantifier la force de réaction du sol sur l'outil. Cette articulation peut être combinée à une autre articulation permettant de modifier la profondeur de l'outil qui peut être intégrée au support ou indépendante du support.

De la même manière, des moyens de contrôle uniques peuvent permettre de réguler plusieurs outils supportés chacun par un support d'outil selon l'invention comportant au moins une articulation équipée de moyens de mesure 86.

## Revendications

1. Support d'outil susceptible de se translater selon une direction sensiblement parallèle à un rang (10), de manière à maintenir un outil (16) au droit de l'axe dudit rang (10) entre des obstacles (12), ledit support comprenant un premier bras (20), un deuxième bras (22) dont une première extrémité est articulée selon un premier axe (24) de rotation à une première extrémité distale du premier bras (20), un troisième bras (26) auquel est relié l'outil (16) dont une première extrémité est articulée selon un deuxième axe (28) de rotation sensiblement parallèle au premier axe (24) à la seconde extrémité du deuxième bras (22) et un quatrième bras (30) dont une première extrémité est articulée selon un troisième axe (32) de rotation sensiblement parallèle au premier axe (24) à la seconde extrémité du troisième bras (26) et dont la seconde extrémité est articulée selon un quatrième axe (34) de rotation sensiblement parallèle au premier axe (24) à une seconde extrémité du premier bras (20), ledit support étant susceptible d'occuper un premier état dans lequel l'outil (16) est disposé au niveau de l'axe du rang et un second état dans lequel l'outil (16) est écarté de l'axe du rang, ledit support comprenant également des moyens (44) de détection d'un obstacle et au moins un actionneur pneumatique (54) piloté par lesdits moyens (44) de détection assurant au moins le maintien du support dans le second état, **caractérisé en ce que** ledit au moins un actionneur (54) pneumatique est intercalé entre le premier bras (20) et un prolongement (62) du deuxième bras (22) disposé à l'opposé au deuxième axe (28) de rotation par rapport au premier axe de rotation (24).

2. Support d'outil selon la revendication 1, **caractérisé en ce que** l'actionneur (54) comprend un corps dont l'extrémité au niveau de laquelle sort sa tige (60) est montée pivotante autour d'un axe (58) solidaire du premier bras (20), l'extrémité de la tige (60) étant reliée au prolongement (62).

3. Support d'outil selon la revendication 1 ou 2, **caractérisé en ce qu'**il comprend des moyens de rappel (38) tendant à maintenir ledit support dans le premier état et **en ce que** l'actionneur pneumatique (54) assure le changement d'état dudit support et son maintien dans le second état à l'encontre des moyens de rappel (38).

4. Support d'outil selon la revendication 3, **caractérisé en ce qu'**il comprend une vanne (56) pilotée par les moyens (44) de détection commandant l'alimentation d'une seule chambre de l'actionneur pneumatique (54).

5. Support d'outil selon l'une quelconque des revendications 1 à 4, **caractérisé en ce que** l'actionneur pneumatique (54) comprend un étrangleur réglable afin d'ajuster la cinématique de l'outil de la position au droit de l'axe du rang à la position écartée.

6. Support d'outil selon l'une quelconque des revendications précédentes, **caractérisé en ce que** les moyens (44) de détection comprennent un palpeur (46) susceptible de pivoter autour d'un axe de rotation (48) solidaire du deuxième bras, sensiblement parallèle à l'axe d'articulation (24) ainsi qu'un capteur (50) permettant de détecter le mouvement de pivotement dudit palpeur (46).

7. Support d'outil selon la revendication 6, **caractérisé en ce qu'**il comprend une butée (53) contre laquelle peut prendre appui le palpeur (46) afin d'assister mécaniquement la déformation dudit support dans le second état.

8. Support d'outil selon l'une quelconque des revendications précédentes, **caractérisé en ce qu'**il comprend des moyens de mesure (86) pour mesurer au moins une résultante de la force de réaction du sol sur ledit outil et des moyens de contrôle (88) ajustant la profondeur de travail du sol dudit outil en fonction des valeurs mesurées par lesdits moyens de mesure (86).

9. Support d'outil selon la revendication 8, **caractérisé en ce qu'**il comprend au moins une articulation (72, 90) comportant deux parties mobiles entre elles et **en ce que** les moyens de mesure (86) sont intercalés entre lesdites parties de manière à quantifier le mouvement relatif entre lesdites deux parties qui est sensiblement proportionnel à la force de réaction du sol sur l'outil (16).

10. Support d'outil selon la revendication 8 ou 9, **caractérisé en ce qu'**il comprend au moins deux articulations, une première articulation (72) permettant de modifier la profondeur de travail de l'outil et une seconde articulation (90) permettant de déterminer la force de réaction du sol sur l'outil.

11. Support d'outil selon la revendication 10, **caractérisé en ce que** la deuxième articulation (90) comprend une partie fixe (92) reliée à un engin motorisé ou à un châssis relié à un engin motorisé et une partie mobile (94) solidaire de l'outil (16), les deux parties (92, 94) étant mobiles l'une par rapport à l'autre selon un axe de pivotement (96) sensiblement parallèle au sol et perpendiculaire à la direction d'avance.

12. Support d'outil selon l'une quelconque des revendications 8 à 11, **caractérisé en ce que** les moyens de mesure (86) se présentent sous la forme d'une jauge de contrainte.

13. Support d'outil selon l'une quelconque des revendications 8 à 12, **caractérisé en ce que** les moyens de contrôle (88) effectuent une moyenne de mesures successives et corrigent la profondeur de l'outil en fonction de cette moyenne.

14. Support d'outil selon la revendication 13, **caractérisé en ce que** les moyens de contrôle (88) modifient la profondeur de l'outil en fonction d'une part de l'écart entre la moyenne et la valeur de la consigne et d'autre part d'une constante de réglage de la réactivité prédéterminée par l'utilisateur, la durée de l'impulsion étant égale à l'écart divisé par la constante de réglage.

## Claims

1. Tool support capable of translatory movement in a direction approximately parallel to a row (10) in order to keep a tool (16) along the axis of the said row (10) between obstacles (12), said support comprising a first arm (20), a second arm (22) with a first tip articulated along a first axis (24) of rotation to a first distal tip of the first arm (20), a third arm (26) to which the tool (16) is connected and with a first tip articulated along a second axis (28) of rotation approximately parallel to the first axis (24) at the second tip of the second arm (22), and a fourth arm (30) of which the first tip is articulated according to a third axis (32) of rotation approximately parallel to the first axis (24) at the second tip of the third arm (26) and of which the second tip is articulated according to a fourth axis (34) of rotation approximately parallel to the first axis (24) at a second tip of the first arm, said support being likely to occupy a first state in which the tool (16) is positioned along the axis of the row, and a second state in which the tool (16) is away from the axis of the row, said support also containing means (44) of detecting an obstacle and at least one pneumatic actuator (54) steered by said means (44) of detection ensuring at least that the support is maintained in the second state, **characterised in that** said at least one pneumatic actuator (54) is positioned between the first arm (20) and an extension (62) of the second arm (22) placed opposite the second axis (28) of rotation in relation to the first axis of rotation (24).

2. Tool support according to claim 1, **characterised in that** the actuator (54) comprises a body, of which the end at which its shaft (60) emerges is mounted so as to pivot around an axis (58) forming a whole with the first arm (20), the tip of the shaft (60) being connected to the extension (62).

3. Tool support according to claim 1 or 2, **characterised in that** it contains means of return (38) that tend to keep said support in its initial state and **in that** the pneumatic actuator (54) ensures a change in state of said support and keeps it in the second state against the means of return (38).

4. Tool support according to claim 3, **characterised in that** it comprises a valve (56) driven by the means (44) of detection controlling the supply to a single chamber in the pneumatic actuator (54).

5. Tool support according to any one of claims 1 to 4, **characterised in that** the pneumatic actuator (54) comprises an adjustable choke valve in order to adjust the kinematics of the tool from the position along the axis to the position away from it.

6. Tool support according to any one of the preceding claims, **characterised in that** the means (44) of detection comprises a tracer (46) capable of pivoting around an axis of rotation (48) forming a whole with the second arm, approximately parallel to the axis of articulation (24), and a sensor (50) that allows the pivoting movement of said tracer (46) to be detected.

7. Tool support according to claim 6, **characterised in that** it comprises a stop (53) against which the tracer (46) may lean in order to assist mechanically with deformation of said support in the second state.

8. Tool support according to any one of the preceding claims, **characterised in that** it comprises means of measuring (86) for determining at least one resultant of the reaction force of the ground on said tool, and means of control (88) that adjust the depth at which the tool works in the ground according to the values measured by said means of measuring (86).

9. Tool support according to claim 8, **characterised in that** it comprises at least one joint (72, 90) containing two parts that are mobile in relation to each other and **in that** the means of measurement (86) are positioned between said parts so as to quantify the relative movement between these two parts, this movement being approximately proportional to the reaction force of the ground on the tool (16).

10. Tool support according to claim 8 or 9, **characterised in that** it contains at least two joints, a first joint (72) that allows the depth at which the tool works to be altered, and a second joint (90) that allows the reaction force of the ground on the tool to be determined.

11. Tool support according to claim 10, **characterised in that** the second joint (90) comprises a fixed part (92) linked to a motorised machine or to a chassis linked to a motorised machine and a mobile part (94) forming a whole with the tool (16), the two parts (92, 94) being mobile in relation to each other around a swivel axis (96) approximately parallel to the ground and perpendicular to the direction of forward movement.

12. Tool support according to any one of claims 8 to 11, **characterised in that** the means of measuring (86) take the form of a strain gauge.

13. Tool support according to any one of Claims 8 to 12, **characterised in that** the means of control (88) provide an average of successive measurements and correct the depth of the tool according to this average.

14. Tool support according to claim 13, **characterised in that** the means of control (88) alter the depth of the tool according to, on the one hand, the difference between the average and the set value and, on the other hand, according to a reactivity adjustment constant pre-determined by the user, the duration of the impulse being equal to the difference divided by the adjustment constant.

## Patentansprüche

1. Werkzeughalter, der geeignet ist, sich in einer zu einer Reihe (10) im Wesentlichen parallelen Richtung zu verschieben, um ein Werkzeug (16) gegenüber der Achse der Reihe (10) zwischen Hindernissen (12) zu halten, wobei der Halter einen ersten Arm (20), einen zweiten Arm (22), von dem ein erstes Ende um eine erste Drehachse (24) an einem ersten distalen Ende des ersten Arms (20) angelenkt ist, einen dritten Arm (26), mit dem das Werkzeug (16) verbunden ist und von dem ein erstes Ende um eine zu der ersten Achse (24) im Wesentlichen parallele zweite Drehachse (28) an dem zweiten Ende des zweiten Arms (22) angelenkt ist, sowie einen vierten Arm (30) umfasst, von dem ein erstes Ende um eine zu der ersten Achse (24) im Wesentlichen parallele dritte Drehachse (32) an dem zweiten Ende des dritten Arms (26) angelenkt ist und dessen zweites Ende um eine zu der ersten Achse (24) im Wesentlichen parallele vierte Drehachse (34) an einem zweiten Ende des ersten Arms (20) angelenkt ist, wobei der Halter geeignet ist, einen ersten Zustand einzunehmen, in dem das Werkzeug (16) im Bereich der Achse der Reihe angeordnet ist, sowie einen zweiten Zustand, in dem das Werkzeug (16) von der Achse der Reihe entfernt ist, wobei der Halter auch Mittel (44) zum Erfassen eines Hindernisses sowie wenigstens einen durch die Erfassungsmittel (44) gesteuerten pneumatischen Aktor (54) umfasst, der wenigstens das Halten des Halters in dem zweiten Zustand sicherstellt, **dadurch gekennzeichnet, dass** der wenigstens eine pneumatische Aktor (54) zwischen dem ersten Arm (20) und einer Verlängerung (62) des zweiten Arms (22), die entgegengesetzt zur zweiten Drehachse (28) gegenüber der ersten Drehachse (24) angeordnet ist, eingefügt ist.

2. Werkzeughalter nach Anspruch 1, **dadurch gekennzeichnet, dass** der Aktor (54) einen Körper umfasst, dessen Ende, in dessen Bereich seine Stange (60) ausfährt, um eine mit dem ersten Arm (20) fest verbundene Achse (58) schwenkbar angebracht ist, wobei das Ende der Stange (60) mit der Verlängerung (62) verbunden ist.

3. Werkzeughalter nach Anspruch 1 oder 2, **dadurch gekennzeichnet, dass** er Rückstellmittel (38) umfasst, die den Halter in dem ersten Zustand halten sollen, und dass der pneumatische Aktor (54) die Zustandsänderung des Halters sowie dessen Halten in dem zweiten Zustand entgegen der Rückstellmittel (38) sicherstellt.

4. Werkzeughalter nach Anspruch 3, **dadurch gekennzeichnet, dass** er ein durch die Erfassungsmittel (44) gesteuertes Ventil (56) umfasst, das die Beaufschlagung einer einzigen Kammer des pneumatischen Aktors (54) steuert.

5. Werkzeughalter nach einem der Ansprüche 1 bis 4, **dadurch gekennzeichnet, dass** der pneumatische Aktor (54) eine einstellbare Drosselklappe umfasst, um die Kinematik des Werkzeugs von der Position gegenüber der Achse der Reihe zu der entfernten Position einzustellen.

6. Werkzeughalter nach einem der vorhergehenden Ansprüche, **dadurch gekennzeichnet, dass** die Erfassungsmittel (44) einen Sensor (46), der geeignet ist, um eine mit dem zweiten Arm fest verbundene, zu der Gelenkachse (24) im Wesentlichen parallele Drehachse (48) zu verschwenken, sowie einen Sensor (50) umfassen, der ermöglicht, die Schwenkbewegung des Sensors (46) zu erfassen.

7. Werkzeughalter nach Anspruch 6, **dadurch gekennzeichnet, dass** er einen Anschlag (53) umfasst, an dem sich der Sensor (46) abstützen kann, um die Verformung des Halters in dem zweiten Zustand mechanisch zu unterstützen.

8. Werkzeughalter nach einem der vorhergehenden Ansprüche, **dadurch gekennzeichnet, dass** er Messmittel (86), um wenigstens eine Resultierende der Reaktionskraft des Bodens auf das Werkzeug zu messen, sowie Kontrollmittel (88) umfasst, welche die Bodenbearbeitungstiefe des Werkzeugs in Abhängigkeit von den durch die Messmittel (86) gemessenen Werten einstellen.

9. Werkzeughalter nach Anspruch 8, **dadurch gekennzeichnet, dass** er wenigstens ein Gelenk (72, 90) aufweist, das zwei untereinander bewegliche Teile umfasst, und dass die Messmittel (86) zwischen den Teilen eingefügt sind, um die Relativbewegung zwischen den beiden Teilen, die im Wesentlichen proportional zu der Reaktionskraft des Bodens auf das Werkzeug (16) ist, quantitativ zu bestimmen.

10. Werkzeughalter nach Anspruch 8 oder 9, **dadurch gekennzeichnet, dass** er wenigstens zwei Gelenke umfasst, wobei ein erstes Gelenk (72) ermöglicht, die Bearbeitungstiefe des Werkzeugs zu ändern, und ein zweites Gelenk (90) ermöglicht, die Reaktionskraft des Bodens auf das Werkzeug zu bestimmen.

11. Werkzeughalter nach Anspruch 10, **dadurch gekennzeichnet, dass** das zweite Gelenk (90) einen festen Teil (92), der mit einem Motorfahrzeug oder mit einem mit einem Motorfahrzeug verbundenen Gestell verbunden ist, sowie einen mit dem Werkzeug (16) fest verbundenen beweglichen Teil (94) umfasst, wobei die beiden Teile (92, 94) um eine Schwenkachse (96), die zum Boden im Wesentlichen parallel und zur Vorschubrichtung senkrecht verläuft, zueinander beweglich sind.

12. Werkzeughalter nach einem der Ansprüche 8 bis 11, **dadurch gekennzeichnet, dass** die Messmittel (86) in Form eines Dehnungsmessgerätes vorliegen.

13. Werkzeughalter nach einem der Ansprüche 8 bis 12, **dadurch gekennzeichnet, dass** die Kontrollmittel (88) einen Mittelwert aufeinander folgender Messungen bestimmen und die Tiefe des Werkzeugs in Abhängigkeit von diesem Mittelwert korrigieren.

14. Werkzeughalter nach Anspruch 13, **dadurch gekennzeichnet, dass** die Kontrollmittel (88) die Tiefe des Werkzeugs in Abhängigkeit einerseits von der Abweichung zwischen dem Mittelwert und dem Sollwert und andererseits von einer durch den Benutzer vorbestimmten Konstante zum Einstellen der Reaktivität ändert, wobei die Impulsdauer gleich der Abweichung dividiert durch die Einstellkonstante ist.
